**Europäisches Patentamt**

(19) **European Patent Office**

**Office européen des brevets**

(11) Veröffentlichungsnummer: **0 102 016**
.B1

(12) # EUROPÄISCHE PATENTSCHRIFT

(45) Veröffentlichungstag der Patentschrift:
11.03.87

(51) Int. Cl.⁴: **A 01 D 27/04**

(21) Anmeldenummer: **83108006.4**

(22) Anmeldetag: **12.08.83**

(54) **Mehrreihige Rübenerntemaschine, vorzugsweise für Schubfahrt-Betrieb im Schlepper-Heckanbau.**

(30) Priorität: **12.08.82 DE 3230012**
**12.08.82 DE 8222713 U**
**13.08.82 DE 3230182 U**

(43) Veröffentlichungstag der Anmeldung:
**07.03.84 Patentblatt 84/10**

(45) Bekanntmachung des Hinweises auf die Patenterteilung:
**11.03.87 Patentblatt 87/11**

(84) Benannte Vertragsstaaten:
**BE DE FR GB NL**

(56) Entgegenhaltungen:
**EP - A - 0 001 652**
**DE - A - 2 354 970**
**DE - A - 2 749 586**
**DE - U - 6 806 495**
**DE - U - 7 928 577**
**DE - U - 8 102 123**

(73) Patentinhaber: **Wilhelm Stoll Maschinenfabrik GmbH,**
**D-3325 Lengede/Broistedt (DE)**

(72) Erfinder: **Westphal, Herbert, Martinsweg 1,**
**D-3201 Hoheneggelsen (DE)**

(74) Vertreter: **Patentanwälte Grünecker, Dr. Kinkeldey, Dr.**
**Stockmair, Dr. Schumann, Jakob, Dr. Bezold, Meister,**
**Hilgers, Dr. Meyer-Plath, Maximilianstrasse 58,**
**D-8000 München 22 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

### Beschreibung

Die Erfindung bezieht sich auf eine mehrreihige Schubfahrt-Rübenerntemaschine für Schlepper-Heckanbau bei der am Maschinengestell in Fahrtrichtung einander nachlaufend angeordnet sind, ein Köpfaggregat, welches mindestens einen Vorköpfer sowie mehrere jeweils pro Rübenreihe vorgesehene Nachköpfer umfasst, ein Rodekörper sowie ein entgegen der Fahrtrichtung angetriebener Rüben-Längsputzer für jede Rübenreihe und eine angetriebene Reinigungs- und Fördereinrichtung zur Rübenquerförderung.

Eine derartige Rübenerntemaschine ist aus dem DE-U-8 102 123 ersichtlich. Bei solchen Rübenerntemaschinen für Schlepper-Heckanbau besteht das Problem, dass man die Rübenerntemaschine relativ kurz bauen muss, um die Vorderachse des Schleppers noch genügend belasten zu können. Diese Verkürzung der Rübenerntemaschine ist jedoch nicht unproblematisch. Wie z.B. aus der Fig. 3 des DE-U-8 102 123 ersichtlich ist, würde ein Näherrücken der Querförderschnecke an den Längsputzer dazu führen, dass der Längsputzer Dreck und Erde in den Querförderer wirft und diesen somit zusetzt.

Darüberhinaus ist aus der EP-A-1652 eine gattungsfremde, selbstfahrende Rübenerntemaschine bekannt, bei welcher ebenfalls hintereinander angeordnet Köpfaggregate, Rodekörper und Rübenquerförderer vorgesehen sind. Die DE-A-2 937 544 beschreibt eine Rodeeinrichtung mit einem sich oberhalb des Rodeschars befindenden Hubradpaares, wobei vor dem Hubradpaar und in dessen Wirkkreis eingreifend ein Rübenlängsputzer angeordnet ist. Die Hubräder des Hubradpaares sind etwa V-förmig zueinander angeordnet. Darüberhinaus ist aus der Praxis eine Rübenerntemaschine bekanntgeworden, bei welcher hintereinander ein Schlegler, ein Blatt-Putzer, ein Schleifköpfer, ein Rübenputzer, Polderschare sowie Transport- und Reinigungswalzen angeordnet sind. Diese Rübenerntemaschine weist eine grosse Baulänge auf und ist aufwendig aufgebaut. Die Rodeschare heben die gerodeten Rüben nur im geringen Masse an und die den Rübentransport sowie die Reinigung vornehmenden Walzen sind derart bodennah angeordnet, dass die vorderen Walzen oftmals Bodenkontakt haben, teilweise sogar im Boden wühlen.

Aufgabe der Erfindung ist es, eine verbesserte Rübenerntemaschine der eingangs erwähnten Art zu schaffen, mit der bei einfachem und kompaktem Aufbau vorerwähnte Mängel vermieden werden und die Ernte sauberer Rüben auch unter schwierigen Erntebedingungen möglich ist.

Diese Aufgabe wird erfindungsgemäss dadurch gelöst, dass für jeden Rodekörper seinen Rodeelementen in Fahrtrichtung nachlaufende und entgegengesetzt der Fahrtrichtung ansteigende Rübenleitstäbe und für jede Reihe ein dem Rodekörper zugeordnetes Hubrad-Paar mit V-förmig zueinanderstehenden, sich oberhalb der Rodeelemente und der Rübenleitstäbe erstreckenden, die Rüben zwischen sich einklemmenden und unter beträchtlichem Höhegewinn entgegengesetzt der Fahrtrichtung über die jeweiligen Rübenleitstäbe hochfördernden, angetriebenen Hubrädern mit elastischen Mitnehmern vorgesehen sind, wobei jeder Rodekörper mit zugeordnetem Rüben-Längsputzer und Hubradpaar ein Rodeaggregat derart bildet, dass jeweils der Rübenlängsputzer in den Wirkkreis des Hubrad-Paares einfasst, und die nachfolgende Reinigungs- und Fördereinrichtung in bodenkontaktfreier, hochgelegter Anordnung gelagert ist, und zwischen den Hubrädern jeden Hubradpaares ein Auskämmelement angeordnet ist.

Diese Lösung gestattet eine kompakte Anordnung der Rübenerntemaschine und sorgt gleichzeitig für die einfache Ernte sauberer Rüben auch unter schwierigen Erntebedingungen. Dabei ist es vorteilhaft, dass die Rüben zunächst geköpft werden und anschliessend durch den tiefliegenden Längsputzer von dem restlichen Blattwerk und Schmutz befreit werden. Während des Putzens werden die Rüben schon von den Rodeelementen leicht angehoben, so dass der Längsputzer gleichzeitig auch eine Lockerung der Rüben bewirkt. Dadurch, dass der Längsputzer in den Wirkkreis der Hubräder einfasst, übergibt er die Rüben an jeweils ein Hubrad-Paar. Solch ein Hubradpaar hebt nun die Rüben an und befördert die Rüben über die nach oben gerichteten Leitstäbe nach oben und wirft die Rüben auf die mit grösserem Abstand über dem Boden angetrieben umlaufende Reinigungs- und Fördereinrichtung. Eventuell nicht von alleine losgelassene Rüben werden durch das Auskämmelement aus dem Hubradbereich herausgekämmt und ebenfalls auf die Reinigungs- und Fördereinrichtung geworfen. Durch den Transport der Rüben mit den Hubrädern und durch das Auskämmen findet eine Vorreinigung statt, so dass durch den Längsputzer kein Schmutz mehr auf den Rübenquerförderer geworfen werden kann. Auch in den Hubradpaaren kann sich keine Erde festsetzen, da die Hubräder V-förmig zueinander angeordnet sind. Der Rübenlängsputzer kann daher sehr tief angeordnet sein, um so seiner Aufgabe wirkungsvoll nachzukommen. Die Rüben werden dann, schon nahezu sauber, im Mittelschwad abgelegt. Ein weiterer Vorteil, der durch die hochgelegte Anordnung der Reinigungs- und Fördereinrichtung bewirkt wird, ist, dass diese nunmehr nicht im Bodenbereich wühlt, wobei sie die Rüben anstatt von dem Erdreich zu befreien, diese erneut mit dem Erdreich bedecken würde. Der grössere Abstand der Reinigungs- und Fördereinrichtung vom Boden sorgt aber auch für einen geringeren Verschleiss, da die Steinaufnahmegefahr weitgehend gebannt ist, sowie aufgrund des geringeren Widerstandes für einen geringeren Antriebskraftbedarf.

Um auch auf stark verunkrauteten und/oder anmoorigen Böden ein verstopfungsarmes Roden zu gewährleisten und auf zusätzliche Scheibenseche verzichten zu können, weist bei einer bevorzugten Ausgestaltung der Erfindung das Rodeaggregat für jede Rodereihe einen Rodekörper auf, welcher als etwa gleichzeitig wirkende Rodeelemente eine

in einem Winkel zur Fahrtrichtung sowie zum Boden angestellte Scharplatte und eine im Winkel zumindest zur Fahrtrichtung angestellte, drehbar gelagerte Rodescheibe aufweist, wobei die Halterungen der beiden Rodeelemente jeweils einen bei Betrachtung von oben konkaven Rübenleitstab tragen und die Rodescheibe sowie das Hubrad-Paar in der Seitenansicht einander überlappen.

Bei einer ebenfalls bevorzugten Ausgestaltung für anmoorige sowie leichte, steinige Böden weist das Rodeaggregat für jede Rodereihe ein Zinkenschar auf, an dessen V-förmig zueinander sowie zur Bodenebene stehenden Zinken sich die bei Betrachtung von oben konkaven Rübenleitstäbe anschliessen, oberhalb derer die Hubräder aus gummielastischem Werkstoff (Gummi/Kunststoff) angetrieben rotieren.

Weitere Merkmale der Erfindung sind den Unteransprüchen zu entnehmen.

Der Gegenstand der Erfindung erstreckt sich nicht nur auf die Merkmale der einzelnen Ansprüche, sondern auch auf deren Kombination/Teilkombinationen.

In der Zeichnung ist ein Ausführungsbeispiel der erfindungsgemässen Rübenerntemaschine, mit Abänderungsvarianten für die Rodeeinrichtung, dargestellt und im folgenden näher erläutert. Es zeigen:

Fig. 1 eine schematische Draufsicht auf eine erfindungsgemässe mehrreihige Schubfahrt-Rübenerntemaschine,

Fig. 2 eine Seitenansicht der Aggregate-Anordnung innerhalb derselben Rübenerntemaschine,

Fig. 3 eine Draufsicht des Rodeaggregates der in Fig. 2 dargestellten Rübenerntemaschine,

Fig. 4 eine Seitenansicht einer abgeänderten Rodeeinrichtung mit aus Scharplatte und Rodescheibe bestehendem Rodekörper sowie

Fig. 5 eine Seitenansicht einer weiter abgeänderten Rodeeinrichtung mit als «Zinkenschar» ausgebildetem Rodekörper.

Die erfindungsgemässe mehrreihige Rübenerntemaschine ist vorzugsweise als sechsreihig arbeitende Maschine für den Schubfahrt-Betrieb im Schlepper-Heckanbau konzipiert. Sie lässt sich jedoch auch in Form anderer bekannter Maschinenkonzipierungen, wie beispielsweise zum Roden von weniger als sechs Reihen, als Selbstfahre usw., ausführen.

Diese Schubfahrt-Rübenerntemaschine weist in einem schleppergetragenen Maschinengestell 1 in Fahrtrichtung (F) einander nachlaufend ein Köpfaggregat 2, ein Rodeaggregat 3 sowie eine in Maschinenlängsrichtung kurzbauende Reinigungs- und Fördereinrichtung 4 auf.

Das Maschinengestell 1 kann in an sich bekannter Weise an die heckseitige Dreipunkthydraulik eines zur Arbeitsfahrt rückwärts fahrenden Schleppers oder aber an einer heckladerartigen Schwingenkonstruktion eines solchen Schleppers aushebbar sowie im Bedarfsfall leicht an- und abbaubar angeordnet sein. Stützräder 5 können dabei der Unterstützung und/oder der Tiefenführung, zumindest des Köpfaggregats 2, dienen.

Das Köpfaggregat 2 umfasst einen Schlegelköpfer 6 als Vorköpfer mit nachgeordneter Rübenblatt-Querförderschnecke 7 sowie für jede Rübenreihe einzeln höhenbeweg- und -steuerbare, nebeneinander angeordnete Nachköpfer 8. Dabei kann ein den Schlegelköpfer 6 und die Rüben-Querförderschnecke 7 aufnehmendes Schleglergehäuse 9 gleichzeitig der Nachköpfer-Anordnung dienen. In bevorzugter Weise ist das Köpfaggregat derart ausgeführt, dass die Nachköpfer 8 mit ihrer Lagerung etwa unterhalb der Querförderschnecke 7 liegen. Dabei kann der Zwischenraum zwischen der Rübenblatt-Querförderschnecke 7 und den Nachköpfern 8 ausserdem für Kupplungszwecke von Köpfaggregat 2 und Rodeaggregat 3 bzw. zur Aufnahme von Scharstielbefestigungen genutzt werden. Der Schlegelköpfer 6 kann über sämtliche Rübenreihen hinweg oder auch für jede Rübenreihe einzeln arbeitend ausgebildet sein. Es ist auch möglich, andere Vorköpfer, z.B. um annähernd vertikale Achsen rotierende Mäheinrichtungen, zu verwenden. Auch ist es denkbar, das Köpfaggregat als Exaktköpfer auszubilden.

Sofern das gehäckselte Rübenblatt geborgen werden soll, lässt sich an der dem Rübenbestand abgewandten Maschinenseite eine Rübenblatt-Überladeeinrichtung 10 vorsehen, die für die Strassentransportfahrt entweder über das Schleglergehäuse 9 liegend hochgeschwenkt wird oder aber lösbar angeordnet ist.

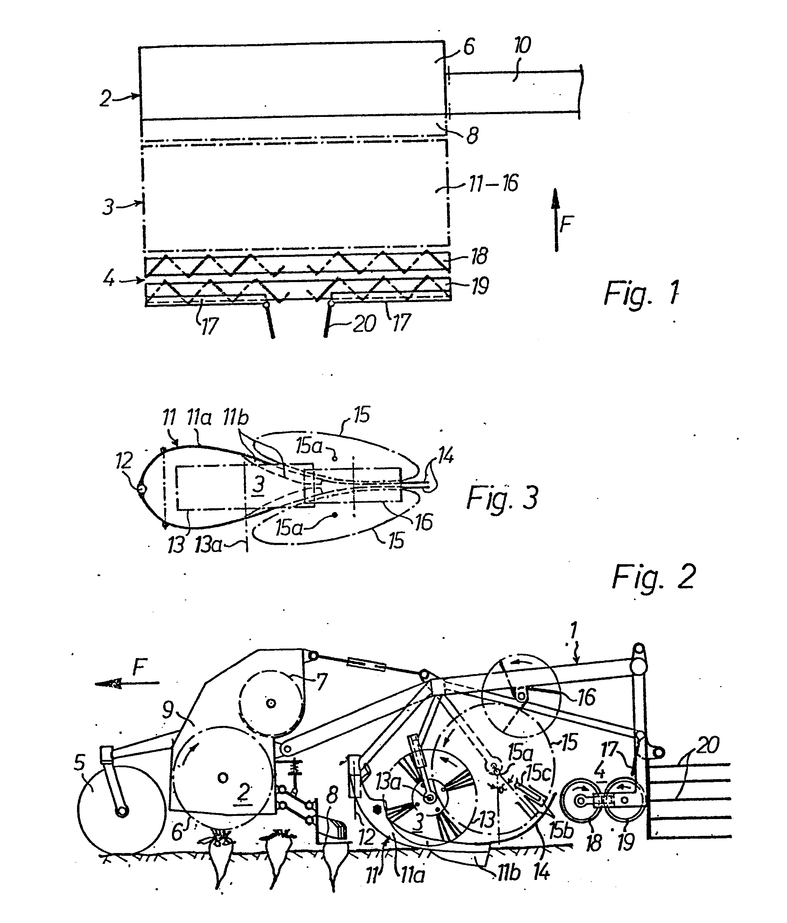

Das Rodeaggregat 3 weist in der Ausführung gemäss Fig. 2 und 3 für jede Rodereihe einen seitwärtsbewegbaren Rodekörper 11 auf, der in der Art eines Plattenschars, insbesondere Polderschars, ausgeführt ist.

Das Plattenschar 11 ist vorteilhafterweise selbsttätig rübensuchend, d.h. selbsttätig die Rübenreihe ansteuernd, gehalten und dabei vorzugsweise um eine nahezu vertikale Schwenkachse 12 seitwärts verschwenkbar.

Die Scharhalterung ist insbesondere derart gestaltet, dass sie das Rübenblatt gut bodenwärts ableitet. Hierzu sind die beiden Scharstiele 11a von ihrem Lagerbereich zu den Scharplatten 11b hin allmählich abfallend gestaltet. Ausserdem kann in der Draufsicht eine Blattabweisungsspitze vorteilhaft sein. In bevorzugter Weise sind die Scharstiele 11a wie in Fig. 3 dargestellt, konkav bei Betrachtung bodenwärts gestaltet und bilden in der Draufsicht eine Lanzettform bzw. Rautenform, wobei zwischen der Schwenkachse 12 und den Scharplatten des Rodekörpers 11 ein Aufnahmeraum für einen um eine Horizontalachse 13a umlaufend angetriebenen Längsputzer 13 entsteht (siehe Fig. 3).

Der Längsputzer 13 wirkt in Fahrtrichtung F der Rodestelle vorlaufend auf die Rübenköpfe ein und schleudert den Schmutz über die Rodestelle hinweg. Er räumt den Roderaum und hält diesen von losem Blattwerk u. dgl. frei. Ausserdem unterstützt er den Rodevorgang, indem er den Rüben einen Bewegungsimpuls nach hinten, d.h. entgegengesetzt der Fahrtrichtung F, erteilt.

Die Scharstiele 11a tragen im rückwärtigen Bereich jeweils einen Rübenleitstab 14, der bei Betrachtung in Richtung zum Boden konkav ausgebildet ist und der Rüben-Hochförderung dient. Die gerodeten Rüben gelangen automatisch darauf und somit auf einer ansteigenden Förderbahn aus dem Rodebereich heraus. Auf den Rübenleitstäben 14 wird gleichzeitig der Erdstrom zerrissen und dabei eine erste Erdabscheidung auf der Förderstrecke, noch vor der Einwirkung der nachfolgenden Reinigungs- und Fördereinrichtung 4, erzielt. Ausserdem erfolgt auf den beiden mit Seitenabstand zueinander stehenden, im wesentlichen parallelverlaufenden Rübenleitstäben 14 eine Steinabsonderung, so dass die Gefahr von Steinverklemmungen und Beschädigungen weitgehend gebannt ist.

Oberhalb der Rübenleitstäbe 14 rotiert ein Hubrad-Paar mit V-förmig zueinander angeordneten, sich oberhalb der Rodeelemente 11b erstreckenden, jede gerodete Rübe erfassende und zwischen sich schonend einklemmende sowie unter beträchtlichem Höhengewinn nach hinten hochfördernde Hubrädern 15. Die V-förmig zueinander stehenden Hubrad-Drehachsen 15a erstrecken sich im wesentlichen quer zur Maschinenlängsrichtung und liegen in der Seitenansicht etwa im Bereich des Scharplatten-Endes. Ihr Durchmesser beträgt annähernd 600–700 mm.

Diese Hubräder 15 sind mit elastischen Mitnehmern bzw. Fingern 15b aus elastischem Werkstoff, wie Gummi, Kunststoff oder dgl., versehen. Die einzelnen Mitnehmer/Finger 15b der Hubräder 15 wirken insbesondere bei eckigem Finger-Querschnitt schmutzabstreifend. Zumindest zwei der vielen Mitnehmer 15b jedes Hubrades 15 sind versteift, vorzugsweise mittels insbesondere aussenseitig anliegender Versteifungselemente 15c (Blattfeder od. dgl.) stabilisiert und weitgehend starrgestellt.

Die zusammenwirkenden Hubräder 15 stehen sowohl in Richtung nach oben als auch in Fahrtrichtung F V-förmig divergierend zueinander. Insbesondere ist der V-Scheitelpunkt im Bereich oberhalb der Rübenleitstäbe 14 angeordnet. In bevorzugter Weise befindet sich die engste Stelle der zusammenwirkenden Hubräder 15 in einem von der Hubrad-Drehachse 15a nach hinten verlaufenden Winkel α von etwa 40–45° zu der die Radachse schneidenden Vertikalen.

Jedes Hubrad-Paar 15 erfasst die Rüben und hebt sie um ein beträchtliches Mass über die Bodenebene hoch, so dass die Reinigungs- und Fördereinrichtung 4, vorzugsweise deren Schneckenwalzen, mit grösserem Abstand zum Boden und somit stets bodenkontaktlos gehalten werden können.

In den rückwärtigen oberen Bereich jedes Hubrad-Paares 15 greift ein rotierendes Auskämmelement 16, vorzugsweise ein rotierender Auswerferpaddel oder ein Schlagkreuz mit Flügeln aus gummielastischem Werkstoff ein, welches die hochgehobene Rübe in Richtung auf die Reinigungs- und Fördereinrichtung 4 umlenkt sowie dabei abklopft und somit letztendlich auch der Erdabscheidung dienlich ist.

Die Reinigungs- und Fördereinrichtung 4 ist in Maschinenlängsrichtung kurzbauend ausgeführt und wird vorzugsweise von einer Schneckenanlage gebildet. Sie ist derart ausgeführt, dass entweder eine Rübenablage an der dem Rübenbestand abgewandten Maschinenseite oder aber im Bereich der Maschinenbreitenhalbierenden erfolgt.

Jeder Schneckenanlage ist eine Leiteinrichtung 17 zugeordnet. Diese ist insbesondere selbst siebfähig (erdabscheidend) ausgeführt, um eine schnelle und gute Erdabführung zu ermöglichen.

Die Reinigungs- und Fördereinrichtung 4 kann von einer einzigen Schneckenwalze mit niedriger Schneckenwendel oder von einer Förderschnecke mit verhältnismässig hoher Schneckenwendel gebildet sein. Dabei läuft diese Schneckenwalze entweder obentragend zwischen siebfähigen Leitelementen um oder aber innerhalb eines ggf. siebfähigen Förderertroges um und zieht die gerodeten sowie auf die Querförderstrecke geworfenen Rüben durch den Fördertrog hindurch.

Bei der in Fig. 3 dargestellten Ausführung weist die Reinigungs- und Fördereinrichtung 4 zwei gegenläufig angetriebene, obentragende Schneckenwalzen 18, 19 auf, die jeweils mit niedriger Schneckenwendel ausgebildet sind. Zwischen diesen beiden Schneckenwalzen (Förderschnecken) 18, 19 besteht eine Förderrinne, die im wirksam werdenden Breiten- und Höhenmass veränderbar sein kann, indem der Achsabstand zwischen den beiden Schneckenwalzen 18, 19 veränderbar ist. Dazu können die Schneckenwellen in verschiebbaren bzw. verschwenkbaren Lagerkörpern lagern. Durch Veränderung der Spaltbreite zwischen den zusammenwirkenden Schneckenwalzen 18, 19 lässt sich auch die Schmutzabfuhr zum Boden entsprechend den jeweiligen Anforderungen einstellen.

Es können auch zwei oder mehr gleichsinnig rotierende nach hinten fördernde Schneckenwalzen 18 hintereinanderliegend angeordnet sein. In diesem Fall ist es vorteilhaft, die Schneckenwalzen so anzuordnen, dass sie einen Trog bilden, d. h. ihre Drehachsen liegen auf einem gedachten, sich bodenwärts verjüngenden Dreieck oder Trapez.

Weiterhin liegt es im Rahmen der Erfindung, mehr als zwei nach hinten umlaufend und rübenmitnehmend angetriebene obentragende Schneckenwalzen 18 anzuordnen. Dabei können diese Schneckenwalzen 18 entweder bodenparallel liegen oder auf einer nach hinten ansteigenden Schräge angeordnet sein.

Bei einer weiter bevorzugten, nicht dargestellten Ausführungsform ist insbesondere der aus mehreren gleichsinnig rotierend angetriebenen, obentragenden Querförderschnecken 18 gebildete Schneckenanlage ein dieselbe auch obenseitig übergreifendes Fangteil zugeordnet. Es ist vorzugsweise als erddurchlässiges Fangrost abgebildet und erstreckt sich zwischen den Hubrädern 15 bzw. dem Auskämmelement 16 und der hintersten Querförderschnecke. Dabei ist es haubenartig ausgeführt oder kann mit einer im Bereich der hintersten Querförderschnecke angeordneten Leitwandung 17 eine Haube (Fang- und/oder Leithaube) bilden.

Um den Reinigungseffekt zumindest annähernd auf die jeweiligen Erfordernisse abstellen zu können, d.h. die Rüben nur im erforderlichen Masse zu reinigen und unnötig harte Behandlung weitgehend auszuschliessen, kann mindestens eine obenfördernde, d.h. oberhalb der Schneckenachse fördernde Schneckenwalze 18 oder 19 mit mindestens einer in der wirksamen Höhe verstellbaren Schneckenwendel versehen sein. Diese Ausführung ermöglicht es, mit ein- und derselben Schneckenwalze entweder bei geringerer Erdanhaftung an den gerodeten Rüben mit niedriger Schneckenwendel und dadurch mit geringerem mechanischen Angriff sowie kleinerem Reinigungsvermögen oder bei grösserer Erdanhaftung an den Rüben mit höherer Schneckenwendel und dadurch mit grösserem Reinigungsvermögen zu arbeiten.

Jede obentragende Schneckenwalze ist insbesondere derart ausgebildet, dass auf dem Walzenkörper eine ein- oder mehrstückige Wendel aus Metall und/oder Gummi bzw. Kunststoff angebracht ist. Die Schneckenwendel kann auch von auf der Schraubenlinie mit Abstand hintereinanderliegenden Nocken, Noppen, Dornen und/oder Stegen, Segmenten, Leisten, gebildet sein, wodurch eine bessere Erdabschabung erzielbar ist.

Anstelle der Schneckenanlage kann die Reinigungs- und Fördereinrichtung 4 auch von einem Kollergang gebildet sein. Dabei setzt sich dieser Kollergang aus einer Vielzahl von Nockenwalzen, Bürstenwalzen od.dgl. zusammen, wobei die einzelnen Walzenachsen etwa in Fahrtrichtung verlaufen. Die Walzenbreite und somit die in Maschinenlängsrichtung F benötigte Baulänge ist verhältnismässig kurz, so dass für die Reinigungs- und Fördereinrichtung 4 nur wenig Baulänge benötigt wird. Bei einer Maschinenausführung für Schwadablage der Rüben sind die einzelnen Walzen antriebsmässig gruppenweise zusammengefasst und einerseits von der linken und andererseits von der rechten Maschinenseite aus zur Mitte fördernd angetrieben.

Die exakte Schwadablage erleichternde Schwadformerelemente sind mit 20 beziffert.

Die mehrreihig rodende Rübenerntemaschine kann derart konzipiert sein, dass die Relativlage von Köpfaggregat 2 und Rodeaggregat 3 veränderbar ist.

Das Köpfaggregat 2 und/oder das Rodeaggregat 3 kann gegenüber dem Maschinengestell 1 in der Höhenlage verstellbar sein. In bevorzugter Weise ist zumindest das Rodeaggregat 3 während der Arbeitsfahrt in der Höhenlage automatisch gesteuert tiefengeführt (höhenveränderbar) gehalten.

Es ist auch möglich, das Maschinengestell 1 in zwei einander in Fahrtrichtung nachlaufende Rahmenteile quer zu teilen und an einem das Rodeaggregat 3 aufnehmenden Rahmenteil das Köpfaggregat 2 zu befestigen, vorzugsweise lösbar aufzuhängen.

Der Antrieb der einzelnen angetriebenen Teile kann verschiedenartig ausgeführt sein.

Bei einer bevorzugten Ausführungsform ist am Maschinengestell 1 ein vom Schlepper antreibbares maschineneigenes Hauptgetriebe (nicht dargestellt) angeordnet, von welchem ein Köpfaggregat-Antrieb und ein Rodeaggregat-Antrieb abzweigen. Es kann jedoch auch das Rodeaggregat 3 eine vom Schlepper antreibbare Antriebseinrichtung (nicht dargestellt) aufweisen, von welcher ein Köpfaggregat-Antrieb (nicht dargestellt) abgezweigt ist.

In dem Maschinengestell 1 kann zumindest das Rodeaggregat 3 oder gruppenweise zusammengefasste Rodeeinheiten stets als Ganzes bzw. als Baugruppe seitwärts bewegbar, ggf. einsteuerbar gehalten sein. In bevorzugter Weise ist zumindest das Rodeaggregat 3 im Maschinengestell 1 in Nachlauffunktion seitwärts verschwenkbar gelagert. Dabei können auch Stellglieder zwischengeschaltet sein, mittels denen eine Relativlagen-Änderung möglich ist bzw. unter Zuhilfenahme von entsprechenden Tasteinrichtungen eine ständige automatische Steuerung bewirkt wird.

Insbesondere beim Arbeiten am Seitenhang kann es vorteilhaft sein, eine zumindest eine Rübenreihe abtastende Tasteinrichtung dem Rodebereich in Fahrtrichtung F vorlaufend anzuordnen, die mit einer zumindest das Rodeaggregat 3 automatisch in Reihenflucht steuernden lenkbaren Stabilisatorscheibe, einer sogenannten Hangscheibe gekoppelt ist.

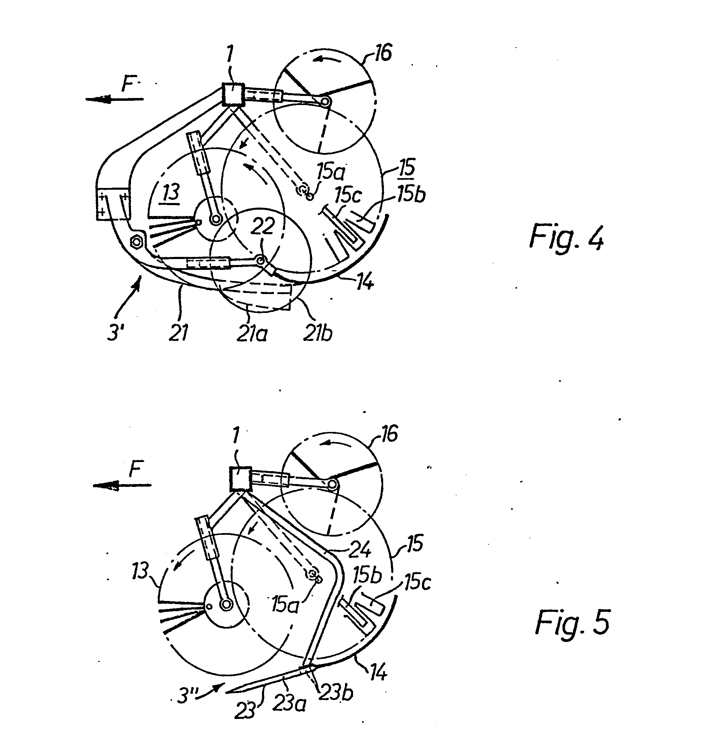

Um auch auf stark verunkrautetem und/oder anmoorigem Boden ein verstopfungsarmes bzw. verstopfungsfreies Roden zu gewährleisten und auf zusätzliche Scheibenseche od.dgl. verzichten zu können, kann die erfindungsgemässe mehrreihige Rübenerntemaschine anstelle des in Fig. 2 und 3 dargestellten Rodeaggregats 3 ein Rodeaggregat 3' gemäss Fig. 4 bzw. ein Rodeaggregat 3'' gemäss Fig. 5 aufweisen.

Bei der Ausführungsform gemäss Fig. 4 ist anstelle des Plattenschar-Rodekörpers 11 gemäss Fig. 2 und 3 eine Kombination aus Plattenschar und Scheibenschar/Rodescheibe vorgesehen und dieser Rodekörper als Ganzes mit 21 beziffert. Der Rodekörper 21 weist dabei zwei etwa gleichzeitig wirkende Rodeelemente 21a, 21b auf, deren eines als eine in einem Winkel zur Fahrtrichtung F sowie zum Boden angestellte Scharplatte 21a und deren anderes als eine im Winkel zumindest zur Fahrtrichtung F angestellte, um eine bodenparallele Drehachse 22 rotierende, vorzugsweise bodenabwälzende Rodescheibe 21b ausgebildet ist.

Die Rodeelemente 21a, 21b liegen unter Einschluss des V-förmigen Roderaums nebeneinander – somit in Querreihe. Es ist ihnen jeweils ein rückwärtiger Rübenleitstab 14 zugeordnet, über welchen jeweils ein schräggestelltes Hubrad 15 angetrieben rotiert. Die beiden Hubräder 15 sind vorzugsweise entsprechend der zu Fig. 2 und 3 beschriebenen Art ausgebildet und angeordnet. Auch hierbei ist dem Hubradpaar 15 ein vorzugsweise rotierendes Auskämmelement 16 zugeordnet, welches insbesondere im rückwärtigen, oberen Bereich des Umlaufkreises der Hubräder eingreift. Gleichfalls kann im vorderen Bereich der Hubrad-Umlaufbahn ein Rüben-Längsputzer 13 zwischen die Hubräder 15 eingreifen.

Die Ausbildung und Anordnung der Scharplatte 21a entspricht im wesentlichen derjenigen einer halben Plattenschar-Ausführung, vorzugsweise Polderschar-Ausführung.

Die Scharhalterung für die Scharplatte 21a des Rodekörpers 21 kann wie beim Rodekörper 11 gemäss Fig. 2 ausgeführt sein oder aber einen um die Hubrad-Rotationsachse 15a rückwärtig herumgeführten Scharstiel aufweisen.

Die Rodescheibe 21b und die Hubräder 15 überlappen einander in der Seitenansicht. In bevorzugter Weise ist die Rodescheibe 21b im Durchmesser kleiner als die Hubräder 15 ausgeführt – beispielsweise etwa 300–500 mm gross. Die Rodescheiben-Drehachse 22 ist dabei – weil ein Bodeneingriff der Rodescheibe 21b etwa im gleichen Maschinen-Längsbereich wie bei der Scharplatte 21a bevorzugt ist – in Fahrtrichtung F den Hubrad-Drehachsen 15a vorlaufend angeordnet. Die Rodescheibe 21b ist in bevorzugter Weise aussenseitig neben dem benachbarten Hubrad 15 angeordnet, kann jedoch auch ggf. an dessen Innenseite, d.h. zwischen den Hubrädern 15, angeordnet sein, wobei dann jedoch ein anderes Weitenmass sowie aufwendigere Halterung erforderlich ist.

In jedem Fall ist die Rodescheibe 21b zumindest zur Maschinenlängsachse mit dieser einen sich nach hinten verengenden Winkel bzw. Rodekeil einschliessend schrägstellt.

Die Rodescheibe 21b kann hierbei nach aussen, beispielsweise tellerartig, ausgebuchtet sein. Mit anderen Worten, ihre Hohlseite ist in diesem Fall der Scharplatte 21a zugewandt. Die Lagerachse befindet sich dabei auf der anderen, der erhabenen Seite.

Es ist auch möglich, die Rodescheibe 21b zum Boden und zu der durch die Rodereihe verlaufenden Vertikalen bzw. Maschinenhochachse schräg verlaufend anzustellen, wobei der eingeschlossene, sich bodenwärts verjüngende Winkel etwa 5 bis 20° beträgt. Mit anderen Worten, die Rodescheibe 21b kann in gleicher Weise wie ein Hubrad 15 schräggestellt werden.

Die Rodescheibe 21b kann in der Höhenlage, Seitenlage (seitlichen Lage in bezug auf die Rodereihe), Schrägstellung in bezug auf die Fahrtrichtung/Rodereihe und/oder Neigung aus der Vertikalen einstellbar gehalten sein.

Die Halterung der Rodescheibe 21b kann wie diejenige für die Scharplatte 21a konzipiert sein, d.h. im wesentlichen nach vorne verlaufen, oder aber von der Lagerstelle aus hochgehen.

Es lässt sich auch eine Scharhalterung vorsehen, wie sie vom Grundkonzept für das Plattenschar gemäss Fig. 2 ausgeführt ist. Dabei ist an mindestens einem der beiden Scharstiele 11a eine Lagernabe für die Drehachse 22 der Rodescheibe 21b angeordnet bzw. anbringbar.

Weiterhin kann auch eine Scharhalterung vorgesehen sein, die in Längsrichtung geteilt ist und für jede Rodekörper-Hälfte einen gesonderten Scharstiel besitzt, von denen mindestens einer abnehmbar ist, so dass entsprechend den jeweiligen Anforderungen entweder ein mit einer Scharplatte 21a oder ein mit einer Rodescheibe 21b bestückter Scharstiel eingesetzt werden kann.

Bei dem Rodekörper 21 bewirkt die Scharplatte 21a ein Rüben-Widerlager sowie das Anheben der zu rodenden Rübe und die Rodescheibe 21b ein Herausschneiden des Bodenbereichs mit der zu rodenden Rübe aus dem Rübenfeld sowie ein Herausdrehen und weiteres Anheben der Rüben bis zum Erfassen durch die zusammenwirkenden Hubräder 15 des zugehörigen Hubrad-Paares.

Auch bei diesem Rodekörper 21 wird aufgrund des Erfassens und Anhebens der Rüben mittels eines Hubrad-Paares 15 wenig Erde aufgenommen und somit wenig Erde auf die nachfolgende Förderstrecke gebracht.

Bei der Ausführung gemäss Fig. 5 ist ein als sogen. «Zinkenschar» ausgebildeter Rodekörper 23 vorgesehen, an dessen V-förmig zueinander sowie zur Bodenebene stehenden und eine Rodegabel bildenden dünnen Zinken 23a sich die bei Betrachtung von oben konkaven Rübenleitstäbe 14 anschliessen oberhalb derer Hubräder 15 aus gummielastischem Werkstoff, z.B. Gummi oder Kunststoff, angetrieben rotieren. Die Hubrad-Drehachsen 15a liegen in Maschinenlängsrichtung (d.h. in der Seitenansicht) etwa am Rodezinken-Ende.

Auch hierbei ist jedem in vorbeschriebener Weise ausgebildeten und angeordneten Hubrad-Paar 15 ein angetrieben rotierendes Auskämmelement 16 zugeordnet, und es kann auch ein in den Hubrad-Umlaufkreis eingreifender Rüben-Längsputzer 13 vorgeschaltet sein.

Die Halterung des Rodekörpers 23 erfolgt vorzugsweise an einer Seite. Hierzu ist ein vorzugsweise rückwärtig um die Hubrad-Drehachse 15a herumgeführter Haltearm 24 vorgesehen, der seitlich an der Zinkengabel, vorzugsweise im rückwärtigen Endbereich, in welchem ein den V-Winkel stabilisierender Quersteg 23b angeordnet sein kann, befestigt ist.

Die Zinken 23a des Rodekörpers 23 sind verhältnismässig dünn bemessen und verjüngen sich zum vorderen Ende. Ihre rückwärtigen Enden können als Rübenleitstäbe 14 weitergeführt sein, oder es sind die Rübenleitstäbe 14 in Verlängerung der rückwärtigen, oberen Zinkenenden am Steg 23b angebracht. Die Rübenleitstäbe 14 können einen kleineren Querschnitt haben als die Rodezinken 23a im rübenhebenden Bereich.

Bei sämtlichen Ausführungen können die Hubräder 15 derart verformt sein, dass sie nach aussen ausgebuchtet, d.h. mit ihren Hohlseiten einander zugewandt sind. Dadurch schliessen die einzelnen Mitnehmer 15b einen an der Funktionsseite/Klemmseite stumpfen Winkel ein.

**Patentansprüche**

1. Mehrreihige Schubfahrt-Rübenerntemaschine für Schlepper-Heckanbau, bei der am Maschinengestell (1) in Fahrtrichtung (F) einander nachlaufend angeordnet sind, ein Köpfaggregat (2), welches mindestens einen Vorköpfer (6) sowie mehrere jeweils pro Rübenreihe vorgesehene Nachköpfer (8) umfasst, ein Rodekörper (11, 21, 23) sowie ein entgegen der Fahrtrichtung angetriebener Rüben-Längsputzer (13) für jede Rübenreihe und eine angetriebene Reinigungs- und Fördereinrichtung (4) zur Rübenquerförderung, dadurch gekennzeichnet, dass für jeden Rodekörper (11, 21, 23) seinen Rodeelementen (11b, 21a, 21b, 23a) in Fahrtrichtung (F) nachlaufende und entgegengesetzt der Fahrtrichtung (F) ansteigende Rübenleitstäbe (14) und für jede Rübenreihe ein dem Rodekörper (11, 21, 23) zugeordnetes Hubrad-Paar (15) mit V-förmig zueinander stehenden, sich oberhalb der Rodeelemente (11b, 21a, 21b, 23a) und der Rübenleitstäbe (14) erstreckenden, die Rüben zwischen sich einklemmenden und unter beträchtlichem Höhegewinn entgegengesetzt der Fahrtrichtung (F) über die jeweiligen Rübenleitstäbe (14) hochfördernden, angetriebenen Hubrädern (15) mit elastischen Mitnehmern (15a) vorgesehen sind, wobei jeder Rodekörper (11, 21, 23) mit zugeordnetem Rüben-Längsputzer (13) und Hubrad-Paar (15) ein Rodeaggregat (3, 3', 3'') derart bildet, dass jeweils der Rübenlängsputzer (13) in den Wirkkreis des Hubrad-Paares (15) einfasst, und die nachfolgende Reinigungs- und Fördereinrichtung (4) in bodenkontaktfreier, hochgelegter Anordnung gelagert ist, und zwischen den Hubrädern (15) jeden Hubradpaares ein Auskämmelement (16) angeordnet ist.

2. Rübenerntemaschine nach Anspruch 1, dadurch gekennzeichnet, dass das Rodeaggregat (3) für jede Rodereihe ein um eine in Fahrtrichtung (F) vorlaufend angeordnete Seitenschwenkachse (12) selbsttätig rübenanpassend seitwärts verschwenkbares Rodeschar (11) aufweist, welches mit in der Seitenansicht langgezogenen, zum Boden flach geneigten Scharstielen (11a) versehen ist, die sich unterhalb des Hubrad-Paares (15) erstrecken sowie in Fahrtrichtung (F) nachlaufend angeordnet jeweils einen bei Betrachtung von oben konkaven Rübenleitstab (14) tragen.

3. Rübenerntemaschine nach Anspruch 2, dadurch gekennzeichnet, dass der Rüben-Längsputzer (13) zwischen der Seitenschwenkachse (12) und den Scharplatten (11b) des Rodeschars (11) angeordnet ist.

4. Rübenerntemaschine nach Anspruch 1, dadurch gekennzeichnet, dass das Rodeaggregat (3') für jede Rodereihe einen Rodekörper (21) aufweist, welcher als etwa gleichzeitig wirkende Rodeelemente eine in einem Winkel zur Fahrtrichtung (F) sowie zum Boden angestellte Scharplatte (21a) und eine im Winkel zumindest zur Fahrtrichtung (F) angestellte, drehbar gelagerte Rodescheibe (21b) besitzt, deren Halterungen jeweils einen bei Betrachtung von oben konkaven Rübenleitstab (14) tragen und wobei die Rodescheibe (21b) und das Hubrad-Paar (15) in der Seitenansicht einander überlappen.

5. Rübenerntemaschine nach Anspruch 4, dadurch gekennzeichnet, dass die Rodescheibe (21b) mit Seitenabstand neben der Scharplatte (21a) etwa auf einer gemeinsamen Maschinen-Querlinie angeordnet ist.

6. Rübenerntemaschine nach Anspruch 4 oder 5, dadurch gekennzeichnet, dass die Rodescheibe (21b) zum Boden und zu der durch die Rodereihe verlaufenden Vertikalen bzw. Maschinenhochachse schräg verlaufend angestellt ist, wobei der eingeschlossene, sich bodenwärts verjüngende Winkel kleiner als 30°, vorzugsweise etwa 5°–20°, ist.

7. Rübenerntemaschine nach wenigstens einem der Ansprüche 4 bis 6, dadurch gekennzeichnet, dass die Rodescheibe (21b) das benachbarte Hubrad (15) aussenseitig überfasst.

8. Rübenerntemaschine nach wenigstens einem der Ansprüche 4 bis 7, dadurch gekennzeichnet, dass die Rodescheibe (21b) nach aussen ausgebuchtet ist.

9. Rübenerntemaschine nach Anspruch 1, dadurch gekennzeichnet, dass das Rodeaggregat (3'') für jede Rodereihe einen als Zinkenschar ausgeführten Rodekörper (23) aufweist, an dessen V-förmig zueinander sowie zur Bodenebene stehenden Zinken (23a) sich die bei Betrachtung von oben konkaven Rübenleitstäbe (14) anschliessen, oberhalb derer die Hubräder (15) angeordnet sind.

10. Rübenerntemaschine nach Anspruch 9, dadurch gekennzeichnet, dass die Zinkengabel mit den daran anschliessenden Rübenleitstäben (14) von einem einzigen, sich an einer Hubrad-Aussenseite erstreckenden und um die Hubrad-Drehachse (15a) herumgeführten Haltearm (24) getragen ist.

11. Rübenerntemaschine nach wenigstens einem der Ansprüche 1 bis 10, dadurch gekennzeichnet, dass die Reinigungs- und Fördereinrichtung (4) von mehreren zwischen sich obenseitig die Rüben tragenden, gegenläufig angetriebenen Schneckenwalzen (18, 19) gebildet ist.

12. Rübenerntemaschine nach wenigstens einem der Ansprüche 1 bis 10, dadurch gekennzeichnet, dass die Reinigungs- und Fördereinrichtung von mehreren, entgegengesetzt der Fahrtrichtung (F) fördernden, gleichsinnig angetriebenen Rüben-Querförderschnecken (18), insbesondere Schneckenwalzen, gebildet ist.

13. Rübenerntemaschine nach Anspruch 11 oder 12, dadurch gekennzeichnet, dass die Schneckenwalzen (18, 19) im Achsabstand veränderbar gehalten sind.

14. Rübenerntemaschine nach wenigstens einem der Ansprüche 11 bis 13, dadurch gekennzeichnet, dass mindestens eine Schneckenwalze (18, 19) mit mindestens einer in der wirksamen Höhe verstellbaren Schneckenwendel versehen ist.

15. Rübenerntemaschine nach wenigstens einem der Ansprüche 1 bis 14, dadurch gekennzeichnet, dass die Relativlage von Köpfaggregat (2) und Rodeaggregat (3, 3', 3'') veränderbar ist.

16. Rübenerntemaschine nach wenigstens einem der Ansprüche 1 bis 15, dadurch gekennzeichnet, dass die Vorköpfanordnung als Schlegelköpfer (6) mit Rübenblatt-Querförderschnecke (7) ausgebildet ist.

17. Rübenerntemaschine nach wenigstens einem der Ansprüche 1 bis 16, dadurch gekennzeichnet, dass das Köpfaggregat (2) und/oder das Rodeaggregat (3, 3', 3'') gegenüber dem Maschinengestell (1) in der Höhenlage verstellbar ist.

18. Rübenerntemaschine nach wenigstens einem der Ansprüche 1 bis 17, dadurch gekennzeichnet, dass zumindest das Rodeaggregat (2) in der Höhenlage automatisch steuerbar ist.

19. Rübenerntemaschine nach wenigstens einem der Ansprüche 1 bis 18, dadurch gekennzeichnet, dass das Köpfaggregat (2), insbesondere dessen Gehäuse (9), welches die Vorköpfanordnung (6, 7) aufnimmt und die Nachköpfer (8) trägt, lösbar befestigt ist.

20. Rübenerntemaschine nach wenigstens einem der Ansprüche 1 bis 19, dadurch gekennzeichnet, dass das Maschinengestell (1) in zwei in Fahrtrichtung (F) einander nachlaufende Rahmenteile quergeteilt ist und an einem das Rodeaggregat (3, 3', 3'') aufnehmenden Rahmenteil das Köpfaggregat (2) befestigt, vorzugsweise lösbar aufgehängt, ist.

21. Rübenerntemaschine nach wenigstens einem der Ansprüche 1 bis 20, dadurch gekennzeichnet, dass am Maschinengestell (1) ein vom Schlepper antreibbares maschineneigenes Hauptgetriebe angeordnet ist, von welchem ein Köpfaggregat-Antrieb und ein Rodeaggregat-Antrieb abzweigen.

22. Rübenerntemaschine nach wenigstens einem der Ansprüche 1 bis 20, dadurch gekennzeichnet, dass das Rodeaggregat (3, 3', 3'') eine vom Schlepper antreibbare Antriebseinrichtung aufweist, von welcher ein Köpfaggregat-Antrieb abgezweigt ist.

23. Rübenerntemaschine nach wenigstens einem der Ansprüche 1 bis 22, dadurch gekennzeichnet, dass am Maschinengestell (1) zumindest das Rodeaggregat (3, 3', 3'') oder Rodeaggregat-Gruppen als Ganzes seitwärts bewegbar gehalten ist bzw. sind.

24. Rübenerntemaschine nach wenigstens einem der Ansprüche 1 bis 23, dadurch gekennzeichnet, dass zumindest das Rodeaggregat (3, 3', 3'') am Maschinengestell (1) in Nachlauffunktion seitwärts verschwenkbar gelagert ist.

25. Rübenerntemaschine nach wenigstens einem der Ansprüche 1 bis 24, dadurch gekennzeichnet, dass der Rodestelle zumindest eine mindestens eine Rübenreihe abtastende Tasteinrichtung in Fahrtrichtung (F) vorlaufend angeordnet ist, die mit einer zumindest das Rodeaggregat (3, 3', 3'') automatisch in Reihenflucht einsteuernden lenkbaren Stabilisatorscheibe (Hangscheibe) gekoppelt ist.

26. Rübenerntemaschine nach wenigstens einem der Ansprüche 1 bis 25, dadurch gekennzeichnet, dass die Hubräder (15) aus gummielastischem Werkstoff bestehen.

27. Rübenerntemaschine nach wenigstens einem der Ansprüche 1 bis 26, dadurch gekennzeichnet, dass das Auskämmelement (16) zwischen den Hubrädern (15) jedes Hubrad-Paares als ein rotierender Auswerfer (Paddel) ausgebildet ist.

28. Rübenerntemaschine nach wenigstens einem der Ansprüche 1 bis 27, dadurch gekennzeichnet, dass die Nachköpfer (8) des Köpfaggregats (2) einzeln höhenverstellbar bzw. steuerbar ausgebildet sind.

**Claims**

1. A multi-row pusher-driven sugar-beet harvester for rear mounting on a tractor, in which there are arranged on the frame (1) of the machine to trail one another in the direction of travel (F) one topping unit (2) which comprises at least one pretopper (6) as well as a number of after-toppers (8) provided respectively per row of beet, one digger body (11, 21, 23) as well as one lengthwise-acting beet cleaner (13) for each row of beet, driven in the direction opposite to the direction of travel, and one driven cleaner and conveyor (4) for transverse conveyance of beet, characterized in that for each digger body (11, 21, 23) there are provided, trailing its digger members (11b, 21a, 21b, 23a) in the direction of travel (F) and rising in the direction opposite to the direction of travel (F), beet guiderods (14), and for each row of beet one lifting-wheel pair (15) associated with the digger body (11, 21, 23) and having driven lifting-wheels (15) which have elastic grippers (15a) and lie with respect to one another in the shape of a V, extending above the digger members (11b, 21a, 21b, 23a) and the beet guiderods (14) and clamping the beet between them and with a considerable gain in height in the direction opposite to the direction of travel (F) conveying the beet upwards via the respective beet guiderods (14), each digger body (11, 21, 23) with the associated lengthwise-acting beet cleaner (13) and lifting-wheel pair (15) forming one digger unit (3, 3', 3'') in such a way that the lengthwise-acting beet cleaner (13) is respectively engaging the active circle of the lifting-wheel pair (15), and the succeeding cleaner and conveyor (4) is supported in an arrangement high up and free of contact with the ground, and a comb-out member (16) is arranged between the lifting wheels (15) of each lifting-wheel pair.

2. A sugar-beet harvester as in Claim 1, characterized in that the digger unit (3) for each digger row exhibits one share (11) which is able to pivot sideways to adapt automatically to the beet, about a lateral axis of pivot (12) running forwards in the direction of travel (F), and which is provided with share hafts (11a) which are elongated in side elevation and have a shallow slope with respect to the ground and which extend underneath the lifting-wheel pair (15) and also carry respectively one beet guiderod (14) which is concave as viewed from above and is arranged trailing in the direction of travel (F).

3. A sugar-beet harvester as in Claim 2, characterized in that the lengthwise-acting beet cleaner (13) is arranged between the lateral axis of pivot (12) and the mould board (11b) of the share (11).

4. A sugar-beet harvester as in Claim 1, characterized in that the digger unit (3') for each digger row exhibits one digger body (21) which has as approximately simultaneously acting digger members one mould board (21a) adjusted at an angle to the direction of travel (F) as well as to the ground and one rotatably supported digger disc (21b) adjusted at an angle at least to the direction of travel (F), the mountings of which carry respectively one beet guiderod (14) which is concave as viewed from above, and in which the digger disc (21b) and the lifting-wheel pair (15) overlap one another in side elevation.

5. A sugar-beet harvester as in Claim 4, characterized in that the digger disc (21b) is arranged beside the mould board (21a) at a distance to the side of it about on a common line transverse to the machine.

6. A sugar-beet harvester as in Claim 4 or 5, characterized in that the digger disc (21b) is adjusted to run obliquely to the ground and to the vertical running through the digger row or respectively the vertical axis of the machine, the angle included, tapering in towards the ground, being less than 30°, preferably about 5°–20°.

7. A sugar-beet harvester as in at least one of the Claims 4 to 6, characterized in that the digger disc (21b) overlaps the adjacent lifting-wheel (15) on the outside.

8. A sugar-beet harvester as in at least one of the Claims 4 to 7, characterized in that the digger disc (21b) is bulged towards the outside.

9. A sugar-beet harvester as in Claim 1, characterized in that the digger unit (3″) for each digger row exhibits one digger body (23) executed as a fork share the tines (23a) of which lie in a V-shape with respect to one another as well as to the plane of the ground and are connected to the beet guiderods (14) which are concave as viewed from above and above which are arranged the lifting-wheels (15).

10. A sugar-beet harvester as in Claim 9, characterized in that the fork share with the root guiderods (15) connected to it is carried by one single supporting arm (24) which extends at the outside of one lifting-wheel and is led round the axis of rotation (15a) of the lifting-wheel.

11. A sugar-beet harvester as in at least one of the Claims 1 to 10, characterized in that the cleaner and conveyor (4) is formed of a number of spiral rotors (18, 19) driven in opposite directions, which carry the beet between them on top.

12. A sugar-beet harvester as in at least one of the Claims 1 to 10, characterized in that the cleaner and conveyor is formed of a number of screw conveyors (18), in particular spiral rotors, driven in the same sense to convey the beet transversely and in a direction opposite to the direction of travel (F).

13. A sugar-beet harvester as in Claim 11 or 12, characterized in that the spiral rotors (18, 19) are supported at axial spacing which may be altered.

14. A sugar-beet harvester as in at least one of the Claims 11 to 13, characterized in that at least one spiral rotor (18, 19) is provided with at least one turn of the spiral adjustable for effective height.

15. A sugar-beet harvester as in at least one of the Claims 1 to 14, characterized in that the relative positions of the topping unit (2) and the digger unit (3, 3′, 3″) may be altered.

16. A sugar-beet harvester as in at least one of the Claims 1 to 15, characterized in that the pretopping arrangement is made as a flail topper (6) with a screw conveyor (7) for conveying the beet leaves transversely.

17. A sugar-beet harvester as in at least one of the Claims 1 to 16, characterized in that the topping unit (2) and/or the digger unit (3, 3′, 3″) are adjustable for height with respect to the frame (1) of the machine.

18. A sugar-beet harvester as in at least one of the Claims 1 to 17, characterized in that at least the digger unit (2) may be controlled automatically for height.

19. A sugar-beet harvester as in at least one of the Claims 1 to 18, characterized in that the topping unit (2), in particular its housing (9) which receives the pretopping arrangement (6, 7) and carries the after-toppers (8), is fastened detachably.

20. A sugar-beet harvester as in at least one of the Claims 1 to 19, characterized in that the machine frame (1) is divided across into two part-frames trailing one another in the direction of travel (F) and onto one part-frame which receives the digger unit (3, 3′, 3″) is fastened, preferably detachably suspended, the topping unit (2).

21. A sugar-beet harvester as in at least one of the Claims 1 to 20, characterized in that on the machine frame (1) a main gear individual to the machine is arranged, which may be driven from the tractor and from which branch out a topping unit drive and a digger unit drive.

22. A sugar-beet harvester as in at least one of the Claims 1 to 20, characterized in that the digger unit (3, 3′, 3″) exhibits a driving mechanism which may be driven from the tractor and from which branches out a drive to the topping unit.

23. A sugar-beet harvester as in at least one of the Claims 1 to 22, characterized in that on the machine frame (1) at least the digger unit (3, 3′, 3″) is supported or digger unit groups as a whole are supported to be movable sideways.

24. A sugar-beet harvester as in at least one of the Claims 1 to 23, characterized in that at least the digger unit (3, 3′, 3″) is supported on the machine frame (1) to be able to pivot sideways with a caster action.

25. A sugar-beet harvester as in at least one of the Claims 1 to 24, characterized in that to scan at least one row of beet there is arranged to run ahead of the point of dig in the direction of travel (F) at least one probe which is coupled to a steerable stabilizer disc (hillside-disc) which steers at least the digging unit (3, 3′, 3″) automatically into alignment with the row.

26. A sugar-beet harvester as in at least one of the Claims 1 to 25, characterized in that the lifting-wheels (15) consist of material having the elasticity of rubber.

27. A sugar-beet harvester as in at least one of the Claims 1 to 26, characterized in that the comb-out member (16) between the lifting-wheels (15) of each lifting-wheel pair is made as a rotating ejector (paddle).

28. A sugar-beet harvester as in at least one of the Claims 1 to 27, characterized in that the after-toppers (8) of the topping unit (2) are made individually adjustable for height or respectively controllable.

**Revendications**

1. Récolteuse de betteraves à plusieurs rangées fonctionnant en mode poussée et destinée à être attelée à l'arrière d'un tracteur, dans laquelle se succèdent dans la direction du déplacement (F), sur le bâti (1) de la machine, un groupe de décolletage (2) comprenant au moins un décolleteur amont (6) ainsi que plusieurs décolleteurs aval (8) prévus respectivement pour chaque rang de betteraves, un corps d'arrachage (11, 21, 23), un décrottoir longitudinal (13) associé à chaque rang de betteraves et entraîné à l'opposé de la direction du déplacement, ainsi qu'un dispositif mené (4) de nettoyage et de convoyage pour l'acheminement transversal des betteraves, caractérisée par le fait que, pour chaque corps d'arrachage (11, 21, 23), l'on a prévu des coutres (14) directeurs de betteraves qui succèdent à ses éléments d'arrachage (11b, 21a, 21b, 23a) dans la direction du déplacement (F) et suivent une pente ascendante à l'opposé de cette direction du déplacement (F) et, pour chaque rang de betteraves, une paire de roues élévatrices (15) associée au corps d'arrachage (11, 21, 23) et présentant des roues élévatrices menées (15) qui sont munies d'organes élastiques d'entraînement (15a), sont mutuellement agencées en V, s'étendent au-dessus des éléments d'arrachage (11b, 21a, 21b, 23a) et des coutres (14) directeurs de betteraves, enserrent entre elles lesdites betteraves et les acheminent vers le haut au-dessus des coutres directeurs respectifs (14) avec un gain de hauteur considérable, à l'opposé de la direction du déplacement (F), chaque corps d'arrachage (11, 21, 23) formant, avec le décrottoir longitudinal (13) de betteraves et la paire de roues élévatrices (15) qui lui sont associés, un groupe d'arrachage (3, 3', 3'') tel que ledit décrottoir longitudinal (13) de betteraves s'engage à chaque fois dans la circonférence d'action de la paire de roues élévatrices (15), le dispositif successif (4) de nettoyage et de convoyage étant installé en surélévation et sans aucun contact avec le sol, et un organe peigneur (16) étant interposé entre les roues élévatrices (15) de chaque paire.

2. Récolteuse de betteraves selon la revendication 1, caractérisée par le fait que le groupe d'arrachage (3) présente, pour chaque rang à arracher, un soc d'arrachage qui peut pivoter latéralement autour d'un axe (12) de pivotement latéral occupant une position avancée dans la direction (F) du déplacement, en s'adaptant automatiquement aux betteraves, et est muni d'oreilles (11a) qui sont étirées longitudinalement en élévation latérale, sont inclinées à plat vers le sol, s'étendent au-dessous de la paire de roues élévatrices (15) et portent, à chaque fois, un coutre (14) directeur de betteraves, occupant une position reculée dans la direction du déplacement (F) et concave observé par en haut.

3. Récolteuse de betteraves selon la revendication 2, caractérisée par le fait que le décrottoir longitudinal (13) de betteraves est intercalé entre l'axe (12) de pivotement latéral et les semelles (11b) du soc d'arrachage (11).

4. Récolteuse de betteraves selon la revendication 1, caractérisée par le fait que le groupe d'arrachage (3') présente, pour chaque rang à arracher, un corps d'arrachage (21) comportant, en tant qu'éléments d'arrachage agissant à peu près simultanément, un soc (21a) incliné d'un certain angle par rapport à la direction du déplacement (F) et au sol, ainsi qu'un disque d'arrachage (21b) monté à rotation et disposé selon un angle au moins par rapport à la direction du déplacement (F), éléments dont les supports portent à chaque fois un coutre (14) directeur de betteraves, de configuration concave observé par en haut, le disque d'arrachage (21b) et la paire de roues élévatrices (15) se chevauchant en élévation latérale.

5. Récolteuse de betteraves selon la revendication 4, caractérisée par le fait que le disque d'arrachage (21b) est disposé à côté du soc (21a), à distance latérale, sensiblement sur une ligne transversale commune de la machine.

6. Récolteuse de betteraves selon la revendication 4 ou 5, caractérisée par le fait que le disque d'arrachage (21b) est agencé avec étendue à l'oblique par rapport au sol et à la verticale ou à l'axe vertical de la machine passant par le rang à arracher, l'angle inscrit, diminuant vers le sol, étant alors inférieur à 30° et sensiblement compris, de préférence, entre 5° et 20°.

7. Récolteuse de betteraves selon au moins l'une des revendications 4 à 6, caractérisée par le fait que le disque d'arrachage (21b) déborde vers l'extérieur au-delà de la roue élévatrice voisine (15).

8. Récolteuse de betteraves selon au moins l'une des revendications 4 à 7, caractérisée par le fait que le disque d'arrachage (21b) est échancré vers l'extérieur.

9. Récolteuse de betteraves selon la revendication 1, caractérisée par le fait que le groupe d'arrachage (3'') présente, pour chaque rang à arracher, un corps d'arrachage (23) réalisé sous la forme d'un soc à dents dont les dents (23a), disposées en V les unes par rapport aux autres et par rapport au plan du sol, se raccordent aux coutres (14) directeurs de betteraves de configuration concave observés par en haut, et au-dessus desquels les roues élévatrices (15) sont installées.

10. Récolteuse de betteraves selon la revendication 9, caractérisée par le fait que la fourche formée par les dents, et les coutres attenants (14) directeurs de betteraves, sont portés par un seul et unique bras de retenue (24), qui s'étend sur une face externe de la roue élévatrice et est guidé circonférentiellement autour de l'axe de rotation (15a) de cette roue élévatrice.

11. Récolteuse de betteraves selon au moins l'une des revendications 1 à 10, caractérisée par le fait que le dispositif (4) de nettoyage et de convoyage est formé par plusieurs cylindres (18, 19) à vis sans fin, entraînés dans des sens opposés et portant entre eux les betteraves à leur face supérieure.

12. Récolteuse de betteraves selon au moins l'une des revendications 1 à 10, caractérisée par le fait que le dispositif de nettoyage et de convoyage est formé par plusieurs vis sans fin (18) de convoyage transversal des betteraves, en particulier des cylindres à vis sans fin, acheminant à l'opposé de la direction du déplacement (F) et entraînés dans le même sens.

13. Récolteuse de betteraves selon la revendication 11 ou 12, caractérisée par le fait que les cylindres (18, 19) à vis sans fin sont maintenus à un espacement axial variable.

14. Récolteuse de betteraves selon au moins l'une des revendications 11 à 13, caractérisée par le fait qu'au moins un cylindre (18, 19) à vis sans fin est pourvu d'au moins une spire d'hélice de hauteur efficace réglable.

15. Récolteuse de betteraves selon au moins l'une des revendications 1 à 14, caractérisée par le fait que les positions relatives du groupe de décolletage (2) et du groupe d'arrachage (3, 3', 3'') peuvent être modifiées.

16. Récolteuse de betteraves selon au moins l'une des revendications 1 à 15, caractérisée par le fait que l'ensemble de décolletage amont est réalisé sous la forme d'un décolleteur (6) à fléaux, avec une vis sans fin (7) d'acheminement transversal des fanes de betteraves.

17. Récolteuse de betteraves selon au moins l'une des revendications 1 à 16, caractérisée par le fait que le groupe de décolletage (2) et/ou le groupe d'arrachage (3, 3', 3'') est réglable quant à sa position en hauteur par rapport au bâti (1) de la machine.

18. Récolteuse de betteraves selon au moins l'une des revendications 1 à 17, caractérisée par le fait qu'au moins la position en hauteur du groupe d'arrachage (2) est commandable automatiquement.

19. Récolteuse de betteraves selon au moins l'une des revendications 1 à 18, caractérisée par le fait que le groupe de décolletage (2), en particulier son capot (9) recevant l'ensemble de décolletage amont (6, 7) et portant les décolleteurs aval (8), est fixé amoviblement.

20. Récolteuse de betteraves selon au moins l'une des revendications 1 à 19, caractérisée par le fait que le bâti (1) de la machine est subdivisé transversalement en deux corps de châssis qui se succèdent mutuellement dans la direction du déplacement (F), le groupe de décolletage (2) étant fixé, de préférence suspendu amoviblement à un corps de châssis recevant le groupe d'arrachage (3, 3', 3'').

21. Récolteuse de betteraves selon au moins l'une des revendications 1 à 20, caractérisée par le fait qu'une transmission principale propre à la machine et pouvant être menée par le tracteur est disposée sur le bâti (1) de ladite machine, transmission dont bifurquent un entraînement du groupe de décolletage et un entraînement du groupe d'arrachage.

22. Récolteuse de betteraves selon au moins l'une des revendications 1 à 20, caractérisée par le fait que le groupe d'arrachage (3, 3', 3'') présente un dispositif d'entraînement qui peut être mené par le tracteur, et dont est dérivé un entraînement du groupe de décolletage.

23. Récolteuse de betteraves selon au moins l'une des revendications 1 à 22, caractérisée par le fait qu'au moins le groupe d'arrachage (3, 3', 3'') ou des ensembles de ce groupe d'arrachage est ou, respectivement, sont maintenus mobiles latéralement comme un tout sur le bâti (1) de la machine.

24. Récolteuse de betteraves selon au moins l'une des revendications 1 à 23, caractérisée par le fait qu'au moins le groupe d'arrachage (3, 3', 3'') est monté à pivotement latéral par inertie sur le bâti (1) de la machine.

25. Récolteuse de betteraves selon au moins l'une des revendications 1 à 24, caractérisée par le fait qu'au moins un dispositif palpeur détectant au moins un rang de betteraves est installé en avancée dans la direction du déplacement (F) par rapport à la zone d'arrachage, ce dispositif étant accouplé à un disque stabilisateur orientable (disque pour travail en pente) qui commande automatiquement au moins le groupe d'arrachage (3, 3', 3''), dans l'alignement des rangs.

26. Récolteuse de betteraves selon au moins l'une des revendications 1 à 25, caractérisée par le fait que les roues élévatrices (15) consistent en un matériau doué de l'élasticité du caoutchouc.

27. Récolteuse de betteraves selon au moins l'une des revendications 1 à 26, caractérisée par le fait que l'organe peigneur (16) est réalisé, entre les roues élévatrices (15) de chaque paire de roues élévatrices, sous la forme d'un projecteur rotatif (palette).

28. Récolteuse de betteraves selon au moins l'une des revendications 1 à 27, caractérisée par le fait que les décolleteurs aval (8) du groupe de décolletage (2) sont réalisés avec faculté de réglage en hauteur ou de commande individuels, respectivement.

Fig. 1

Fig. 3

Fig. 2

0 102 016

Fig. 4

Fig. 5

15